# EUROPEAN PATENT APPLICATION

(11) **EP 4 410 886 A1**
(43) Date of publication of application: **07.08.2024**
(21) Application number: 22876501.2
(22) Date of filing: 29.09.2022
(51) Int. Cl.: C08L 27/06, B29C 41/18, B29C 41/36, B32B 5/18, B32B 27/22, B32B 27/30, B32B 27/40, C08K 3/36, C08L 67/00

(54) **VINYL CHLORIDE RESIN COMPOSITION, VINYL CHLORIDE RESIN MOLDED ARTICLE, AND LAMINATE**

(30) Priority: 30.09.2021 JP 2021162211
(71) Applicant: Zeon Corporation, Tokyo 100-8246 (JP)
(72) Inventor: NISHIMURA, Shota, Tokyo 100-8246 (JP)
(74) Representative: Maiwald GmbH
(86) International application number: PCT/JP2022/036577
(87) International publication number: WO 2023/054638

(57) **Abstract**

Provided is a vinyl chloride resin composition that is capable of forming a vinyl chloride resin molded product having excellent adhesiveness to a foamed polyurethane molded product. The vinyl chloride resin composition contains a vinyl chloride resin, a polyester plasticizer, and silica, and satisfies relationship formula (1): Y ≥ -224X + 325, given that content of the silica relative to 100 parts by mass of the vinyl chloride resin is taken to be X parts by mass and oil absorption capacity of the silica is taken to be Y mL/100 g. The vinyl chloride resin composition is preferably used in powder molding.

## Description

### TECHNICAL FIELD

The present disclosure relates to a vinyl chloride resin composition, a vinyl chloride resin molded product, and a laminate.

### BACKGROUND

Vinyl chloride resins are used in a variety of applications due to generally having excellent characteristics in terms of cold resistance, heat resistance, oil resistance, and so forth.

Specifically, automobile interior materials such as a surface skin formed of a vinyl chloride resin molded product and a laminate obtained by lining a surface skin formed of a vinyl chloride resin molded product with a foamed product such as foamed polyurethane are used in the formation of automobile interior components such as automobile instrument panels and door trims.

A vinyl chloride resin molded product that constitutes a surface skin of an automobile interior component such as an automobile instrument panel is produced, for example, by performing molding by a powder molding method such as powder slush molding with respect to a vinyl chloride resin composition that contains a vinyl chloride resin, a plasticizer, and additives (for example, refer to Patent Literature (PTL) 1).

As one specific example, a vinyl chloride resin molded product is produced in PTL 1 through powder slush molding of a vinyl chloride resin composition that contains vinyl chloride resin particles, a plasticizer such as a polyester plasticizer, and additives such as a hydrotalcite stabilizer, a zeolite stabilizer, and a β-diketone.

### CITATION LIST

### Patent Literature

PTL 1: JP2012-197394A

### SUMMARY

### (Technical Problem)

In a situation in which a molded product is formed by lining a vinyl chloride resin molded product with a foamed product of polyurethane (hereinafter, also referred to as a "foamed polyurethane molded product"), it is desirable for the vinyl chloride resin molded product and the foamed polyurethane molded product to adhere well without peeling apart.

However, when using the vinyl chloride resin composition of the conventional technique described above in which a polyester plasticizer is used as a plasticizer, there is room for improvement of adhesiveness of a formed vinyl chloride resin molded product to a foamed polyurethane molded product.

Accordingly, one object of the present disclosure is to provide a vinyl chloride resin composition that is capable of forming a vinyl chloride resin molded product having excellent adhesiveness to a foamed polyurethane molded product.

Another object of the present disclosure is to provide a vinyl chloride resin molded product having excellent adhesiveness to a foamed polyurethane molded product.

Yet another object of the present disclosure is to provide a laminate including this vinyl chloride resin molded product.

### (Solution to Problem)

The inventor conducted diligent investigation with the aim of solving the problem set forth above. The inventor discovered that by adding silica to a vinyl chloride resin composition containing a polyester plasticizer and by adjusting the content of the silica relative to a vinyl chloride resin and the oil absorption capacity of the silica so as to satisfy a specific relationship formula, a vinyl chloride resin molded product that is formed using the vinyl chloride resin composition can display excellent adhesiveness to a foamed polyurethane molded product. In this manner, the inventor completed the present disclosure.

Specifically, the present disclosure aims to advantageously solve the problem set forth above, and [1] a presently disclosed vinyl chloride resin composition comprises a vinyl chloride resin, a polyester plasticizer, and silica, wherein the vinyl chloride resin composition satisfies relationship formula (1): Y ≥ -224X + 325, given that content of the silica relative to 100 parts by mass of the vinyl chloride resin is taken to be X parts by mass and oil absorption capacity of the silica is taken to be Y mL/100 g.

In the case of a vinyl chloride resin composition containing a vinyl chloride resin, a polyester plasticizer, and silica, adjusting the content of the silica relative to 100 parts by mass of the vinyl chloride resin and the oil absorption capacity of the silica so as to satisfy the specific relationship formula (1) set forth above in this manner makes it possible for a vinyl chloride resin molded product formed using the vinyl chloride resin composition to display excellent adhesiveness to a foamed polyurethane molded product.

Note that the "oil absorption capacity" of silica referred to in the present disclosure can be measured in accordance with JIS K 5101-13-2 (Test Methods For Pigments - Part 13: Oil Absorption - Section 2: Boiled Linseed Oil Method). Specifically, the silica serving as a sample is taken onto a glass plate, boiled linseed oil is gradually dripped from a burette while kneading these materials together using a palette knife, and the volume of boiled linseed oil at a point at which there is sudden softening is taken to be an end point.

[2] In the vinyl chloride resin composition according to the foregoing [1], the oil absorption capacity of the silica is preferably 200 mL/100 g or more.

By using silica having an oil absorption capacity that is not less than the specific value set forth above, it is possible to further improve adhesiveness to a foamed polyurethane molded product of a vinyl chloride resin molded product that is formed using the vinyl chloride resin composition. Moreover, by using silica having an oil absorption capacity that is not less than the specific value set forth above, it is possible to sufficiently improve adhesiveness to a foamed polyurethane molded product of a vinyl chloride resin molded product that is formed using the vinyl chloride resin composition even when the additive amount of the silica is restricted to a small amount, and thus it is possible to ensure sufficiently high tensile characteristics (tensile strength and tensile elongation) of a formed vinyl chloride resin molded product.

[3] In the vinyl chloride resin composition according to the foregoing [1] or [2], the silica preferably has a volume-average particle diameter of not less than 0.1 µm and not more than 100 µm.

By using silica having a volume-average particle diameter that is within the specific range set forth above, it is possible to further improve adhesiveness to a foamed polyurethane molded product of a vinyl chloride resin molded product that is formed using the vinyl chloride resin composition and also to ensure sufficiently high tensile characteristics (tensile strength and tensile elongation) of the vinyl chloride resin molded product.

Note that the "volume-average particle diameter of silica" referred to in the present disclosure can be measured by a method described in the EXAMPLES section of the present specification.

[4] In the vinyl chloride resin composition according to any one of the foregoing [1] to [3], the content of the silica is preferably not less than 0.1 parts by mass and not more than 2 parts by mass relative to 100 parts by mass of the vinyl chloride resin.

When the content of the silica in the vinyl chloride resin composition relative to 100 parts by mass of the vinyl chloride resin is within the specific range set forth above, adhesiveness to a foamed polyurethane molded product of a vinyl chloride resin molded product that is formed using the vinyl chloride resin composition can be further improved while also ensuring sufficiently high tensile characteristics (tensile strength and tensile elongation) of the vinyl chloride resin molded product.

[5] The vinyl chloride resin composition according to any one of the foregoing [1] to [4] preferably further satisfies relationship formula (2): Y ≥ -100X + 325.

When the vinyl chloride resin composition further satisfies the specific relationship formula (2) set forth above, adhesiveness to a foamed polyurethane molded product of a vinyl chloride resin molded product that is formed using the vinyl chloride resin composition can be further improved.

[6] In the vinyl chloride resin composition according to any one of the foregoing [1] to [5], the polyester plasticizer preferably includes an adipic acid polyester.

When an adipic acid polyester is used as the polyester plasticizer, heat shrinkage resistance of a vinyl chloride resin molded product that is formed using the vinyl chloride resin composition can be improved.

[7] In the vinyl chloride resin composition according to any one of the foregoing [1] to [6], content of the polyester plasticizer is preferably not less than 30 parts by mass and not more than 200 parts by mass relative to 100 parts by mass of the vinyl chloride resin.

When the content of the polyester plasticizer in the vinyl chloride resin composition relative to 100 parts by mass of the vinyl chloride resin is within the specific range set forth above, tensile characteristics (tensile strength and tensile elongation) and heat shrinkage resistance of a vinyl chloride resin molded product that is formed using the vinyl chloride resin composition can be improved while also ensuring sufficiently high adhesiveness of the vinyl chloride resin molded product to a foamed polyurethane molded product.

[8] The vinyl chloride resin composition according to any one of the foregoing [1] to [7] is preferably used in powder molding.

By using the vinyl chloride resin composition in powder molding, it is easy to obtain a vinyl chloride resin molded product that can be used well as an automobile interior material such as a surface skin for an automobile instrument panel, for example.

[9] The vinyl chloride resin composition according to any one of the foregoing [1] to [8] is preferably used in powder slush molding.

By using the vinyl chloride resin composition in powder slush molding, it is even easier to obtain a vinyl chloride resin molded product that can be used well as an automobile interior material such as a surface skin for an automobile instrument panel, for example.

Moreover, the present disclosure aims to advantageously solve the problem set forth above, and [10] a presently disclosed vinyl chloride resin molded product is obtained through molding of the vinyl chloride resin composition according to any one of the foregoing [1] to [9].

A vinyl chloride resin molded product that is obtained through molding of the vinyl chloride resin composition set forth above in this manner can be used well as an automobile interior material because the vinyl chloride resin molded product has excellent adhesiveness to a foamed polyurethane molded product.

[11] The vinyl chloride resin molded product according to the foregoing [10] is preferably for a surface skin of an automobile instrument panel.

By using the presently disclosed vinyl chloride resin molded product as a surface skin of an automobile instrument panel, it is possible to produce an automobile instrument panel having a surface skin with excellent adhesiveness to a foamed polyurethane molded product.

Furthermore, the present disclosure aims to advantageously solve the problem set forth above, and [12] a presently disclosed laminate comprises: a foamed polyurethane molded product; and the vinyl chloride resin molded product according to the foregoing [10] or [11].

A laminate that includes a foamed polyurethane molded product and the vinyl chloride resin molded product set forth above has good adhesion of the vinyl chloride resin molded product and the foamed polyurethane molded product and has a vinyl chloride resin molded product part that is not easily peeled off.

[13] The laminate according to the foregoing [12] is preferably for an automobile instrument panel.

When the presently disclosed laminate is used as an automobile instrument panel in this manner, a surface skin and a foamed polyurethane molded product of the produced automobile instrument panel can adhere well and not easily be peeled apart.

### (Advantageous Effect)

According to the present disclosure, it is possible to provide a vinyl chloride resin composition that is capable of forming a vinyl chloride resin molded product having excellent adhesiveness to a foamed polyurethane molded product.

Moreover, according to the present disclosure, it is possible to provide a vinyl chloride resin molded product having excellent adhesiveness to a foamed polyurethane molded product.

Furthermore, according to the present disclosure, it is possible to provide a laminate including this vinyl chloride resin molded product.

### DETAILED DESCRIPTION

The following provides a detailed description of embodiments of the present disclosure.

The presently disclosed vinyl chloride resin composition can be used, for example, in formation of the presently disclosed vinyl chloride resin molded product. Moreover, a vinyl chloride resin molded product formed using the presently disclosed vinyl chloride resin composition can suitably be used, for example, as an automobile interior material such as a surface skin included in an automobile interior component such as an automobile instrument panel or a door trim.

The presently disclosed vinyl chloride resin molded product can be used, for example, in formation of the presently disclosed laminate. Moreover, a laminate formed using the presently disclosed vinyl chloride resin molded product can suitably be used, for example, as an automobile interior material used in production of an automobile interior component such as an automobile instrument panel or a door trim.

### (Vinyl chloride resin composition)

Features of the presently disclosed vinyl chloride resin composition are that it contains: (a) a vinyl chloride resin; (b) a polyester plasticizer; and (c) silica, and satisfies a specific relationship formula, given that the content of the (c) silica relative to 100 parts by mass of the (a) vinyl chloride resin is taken to be X parts by mass and the oil absorption capacity of the (c) silica is taken to be Y mL/100 g.

Note that the presently disclosed vinyl chloride resin composition may optionally further contain plasticizers other than the (b) polyester plasticizer mentioned above (hereinafter, also referred to as "(d) other plasticizers").

Moreover, the presently disclosed vinyl chloride resin composition may optionally further contain additives other than the (a) vinyl chloride resin, (b) polyester plasticizer, (c) silica, and (d) other plasticizers mentioned above.

The (c) silica is a component that can improve adhesiveness to a foamed polyurethane molded product of a vinyl chloride resin molded product that is formed using the vinyl chloride resin composition. Moreover, the adhesiveness of a vinyl chloride resin molded product to a foamed polyurethane molded product can be influenced not only by the content of the (c) silica in the vinyl chloride resin composition, but also by the oil absorption capacity of the (c) silica.

For example, when the oil absorption capacity of the (c) silica is small, it may not be possible to sufficiently improve adhesiveness of a vinyl chloride resin molded product to a foamed polyurethane molded product even by increasing the content of the (c) silica. Moreover, when the content of the (c) silica is low, it may not be possible to sufficiently improve adhesiveness of a vinyl chloride resin molded product to a foamed polyurethane molded product even by increasing the oil absorption capacity of the (c) silica.

Accordingly, when the object is to sufficiently improve adhesiveness of a formed vinyl chloride resin molded product to a foamed polyurethane molded product, the lower limit for the content of the (c) silica can be said to be variable depending on the oil absorption capacity of the (c) silica, and conversely, the lower limit for the oil absorption capacity of the (c) silica can be said to be variable depending on the content of the (c) silica.

The inventor confirmed as a result of studies that there is a linear negative correlation between the content of the (c) silica and the oil absorption capacity of the (c) silica in a vinyl chloride resin composition displaying the desired effect. The inventor found that when this correlation is expressed as a linear approximation with the content of the (c) silica relative to 100 parts by mass of the (a) vinyl chloride resin taken to be X parts by mass and the oil absorption capacity of the (c) silica taken to be Y mL/100 g, adhesiveness of a vinyl chloride resin molded product to a foamed polyurethane molded product can be sufficiently improved in a case in which a certain Y relative to a certain X is on this linear approximation or in a region above the linear approximation. Note that X and Y are both positive values.

Specifically, a feature of the presently disclosed vinyl chloride resin composition is that it satisfies relationship formula (1): Y ≥ -224X + 325, given that the content of the (c) silica relative to 100 parts by mass of the (a) vinyl chloride resin is taken to be X parts by mass and the oil absorption capacity of the (c) silica is taken to be Y mL/100 g.

As a result of the presently disclosed vinyl chloride resin composition satisfying the relationship formula (I) set forth above, the presently disclosed vinyl chloride resin composition is capable of forming a vinyl chloride resin molded product having excellent adhesiveness to a foamed polyurethane molded product.

Moreover, in a situation in which a vinyl chloride resin molded product that has been formed using the presently disclosed vinyl chloride resin composition is lined with a foamed polyurethane molded product, it is possible to form a laminate in which the vinyl chloride resin molded product and the foamed polyurethane molded product are adhered well and are not easily peeled apart.

Consequently, by using the presently disclosed vinyl chloride resin composition, it is possible to obtain a vinyl chloride resin molded product that is suitable as an automobile interior material, such as a surface skin for an automobile instrument panel or a surface skin for a door trim, that adheres well and is not easily peeled off in a situation in which it is lined with a foamed polyurethane molded product.

Note that from a viewpoint of easily obtaining a vinyl chloride resin molded product that can be used well as an automobile interior material using the presently disclosed vinyl chloride resin composition, for example, the presently disclosed vinyl chloride resin composition is preferably used in powder molding, and is more preferably used in powder slush molding.

### <(a) Vinyl chloride resin>

A particulate vinyl chloride resin is normally used as the (a) vinyl chloride resin. For example, one type or two or more types of vinyl chloride resin particles can be included as the (a) vinyl chloride resin, and one type or two or more types of vinyl chloride resin fine particles can optionally be further included as the (a) vinyl chloride resin. In particular, the (a) vinyl chloride resin preferably includes at least vinyl chloride resin particles, and more preferably includes vinyl chloride resin particles and vinyl chloride resin fine particles.

The (a) vinyl chloride resin can be produced by a conventionally known production method such as suspension polymerization, emulsion polymerization, solution polymerization, or bulk polymerization.

In the present specification, the term "resin particles" is used to refer to particles having a particle diameter of 30 µm or more, whereas the term "resin fine particles" is used to refer to particles having a particle diameter of less than 30 µm.

Examples of the (a) vinyl chloride resin include homopolymers composed of vinyl chloride monomer units and vinyl chloride copolymers preferably comprising 50 mass% or more of vinyl chloride monomer units, and more preferably comprising 70 mass% or more of vinyl chloride monomer units. Specific examples of monomers (comonomers) that are copolymerizable with vinyl chloride monomer and can be used to form a vinyl chloride copolymer include monomers described in WO2016/098344A1, for example. One of these components may be used individually, or two or more of these components may be used in combination in a freely selected ratio.

### «Vinyl chloride resin particles»

In the vinyl chloride resin composition, the vinyl chloride resin particles normally function as a matrix resin (base material). The vinyl chloride resin particles are preferably produced by suspension polymerization.

### [Average degree of polymerization]

The average degree of polymerization of a vinyl chloride resin forming the vinyl chloride resin particles is preferably 800 or more, and more preferably 1,000 or more, and is preferably 5,000 or less, more preferably 3,000 or less, and even more preferably 2,800 or less. This is because sufficient physical strength of a vinyl chloride resin molded product formed using the vinyl chloride resin composition can be ensured while also improving tensile characteristics (particularly tensile elongation) of the vinyl chloride resin molded product, for example, when the average degree of polymerization of the vinyl chloride resin forming the vinyl chloride resin particles is not less than any of the lower limits set forth above. A vinyl chloride resin molded product having good tensile elongation can suitably be used as an automobile interior material, such as a surface skin of an automobile instrument panel, that has excellent ductility and that ruptures as designed without scattering of fragments when an airbag expands and is deployed, for example. Moreover, meltability of the vinyl chloride resin composition can be improved when the average degree of polymerization of the vinyl chloride resin forming the vinyl chloride resin particles is not more than any of the upper limits set forth above.

Furthermore, the average degree of polymerization of the vinyl chloride resin forming the vinyl chloride resin particles may be 1,700 or more, or may be 1,700 or less.

The "average degree of polymerization" referred to in the present disclosure can be measured in accordance with JIS K6720-2.

### [Average particle diameter]

The average particle diameter of the vinyl chloride resin particles is normally 30 µm or more, preferably 50 µm or more, and more preferably 100 µm or more, and is preferably 500 µm or less, and more preferably 200 µm or less. This is because powder fluidity of the vinyl chloride resin composition improves when the average particle diameter of the vinyl chloride resin particles is not less than any of the lower limits set forth above. Moreover, meltability of the vinyl chloride resin composition further improves and surface smoothness of a vinyl chloride resin molded product formed using the composition can also be improved when the average particle diameter of the vinyl chloride resin particles is not more than any of the upper limits set forth above.

Furthermore, the average particle diameter of the vinyl chloride resin particles may be 130 µm or more, or may be 130 µm or less.

The "average particle diameter" referred to in the present disclosure can be measured as the volume-average particle diameter by laser diffraction in accordance with JIS Z8825.

### [Proportional content]

The proportional content of the vinyl chloride resin particles in the (a) vinyl chloride resin is preferably 70 mass% or more, and more preferably 80 mass% or more, can be 100 mass%, and is preferably 95 mass% or less, and more preferably 90 mass% or less. This is because sufficient physical strength of a vinyl chloride resin molded product formed using the vinyl chloride resin composition can be ensured while also improving tensile elongation of the vinyl chloride resin molded product when the proportional content of the vinyl chloride resin particles in the (a) vinyl chloride resin is not less than any of the lower limits set forth above. Moreover, powder fluidity of the vinyl chloride resin composition improves when the proportional content of the vinyl chloride resin particles in the (a) vinyl chloride resin is not more than any of the upper limits set forth above.

Furthermore, the proportional content of the vinyl chloride resin particles in the (a) vinyl chloride resin may be 89 mass% or more.

### «Vinyl chloride resin fine particles»

In the vinyl chloride resin composition, the vinyl chloride resin fine particles normally function as a dusting agent (powder fluidity modifier). The vinyl chloride resin fine particles are preferably produced by emulsion polymerization.

### [Average degree of polymerization]

The average degree of polymerization of a vinyl chloride resin forming the vinyl chloride resin fine particles is preferably 500 or more, and more preferably 700 or more, and is preferably 2,600 or less, and more preferably 2,400 or less. This is because powder fluidity of the vinyl chloride resin composition improves and tensile elongation of a molded product obtained using the composition also improves when the average degree of polymerization of the vinyl chloride resin forming the vinyl chloride resin fine particles that serve as a dusting agent is not less than any of the lower limits set forth above. Moreover, meltability of the vinyl chloride resin composition improves and surface smoothness of a vinyl chloride resin molded product formed using the composition also improves when the average degree of polymerization of the vinyl chloride resin forming the vinyl chloride resin fine particles is not more than any of the upper limits set forth above.

Furthermore, the average degree of polymerization of the vinyl chloride resin forming the vinyl chloride resin fine particles may be 800 or more, or may be 800 or less.

### [Average particle diameter]

The average particle diameter of the vinyl chloride resin fine particles is normally less than 30 µm, preferably 10 µm or less, and more preferably 5 µm or less, and is preferably 0.1 µm or more, and more preferably 1 µm or more. This is because the vinyl chloride resin fine particles are not too small to function as a dusting agent, for example, and powder fluidity of the vinyl chloride resin composition improves when the average particle diameter of the vinyl chloride resin fine particles is not less than any of the lower limits set forth above. Moreover, meltability of the vinyl chloride resin composition further increases and surface smoothness of a formed vinyl chloride resin molded product can be further improved when the average particle diameter of the vinyl chloride resin fine particles is not more than any of the upper limits set forth above.

Note that the average particle diameter of the vinyl chloride resin fine particles may be 1.8 µm or more, or may be 1.8 µm or less.

### [Proportional content]

The proportional content of the vinyl chloride resin fine particles in the (a) vinyl chloride resin may be 0 mass%, but is preferably 5 mass% or more, and more preferably 10 mass% or more, and is preferably 30 mass% or less, and more preferably 20 mass% or less. This is because powder fluidity of the vinyl chloride resin composition improves when the proportional content of the vinyl chloride resin fine particles in the (a) vinyl chloride resin is not less than any of the lower limits set forth above. Moreover, physical strength of a vinyl chloride resin molded product formed using the vinyl chloride resin composition can be further increased when the proportional content of the vinyl chloride resin fine particles in the (a) vinyl chloride resin is not more than any of the upper limits set forth above.

Furthermore, the proportional content of the vinyl chloride resin fine particles in the (a) vinyl chloride resin may be 11 mass% or less.

### <(b) Polyester plasticizer>

The (b) polyester plasticizer is a component that can impart adequate tensile characteristics (tensile strength and tensile elongation) to a vinyl chloride resin molded product formed using the vinyl chloride resin composition. Moreover, in a situation in which a laminate is formed by lining a vinyl chloride resin molded product formed using the vinyl chloride resin composition with a foamed polyurethane molded product, the use of the (b) polyester plasticizer as a plasticizer makes it possible to improve heat shrinkage resistance of the vinyl chloride resin molded product because the (b) polyester plasticizer tends not to migrate to the foamed polyurethane molded product from the vinyl chloride resin molded product even at high temperature.

A polyester such as a polyester including a structural unit derived from adipic acid (adipic acid polyester), a polyester including a structural unit derived from sebacic acid (sebacic acid polyester), or a polyester including a structural unit derived from phthalic acid (phthalic acid polyester), for example, can be used as the (b) polyester plasticizer without any specific limitations. One of these polyesters may be used individually, or two or more of these polyesters may be used as a mixture in a freely selected ratio.

In particular, from a viewpoint of further increasing heat shrinkage resistance of a vinyl chloride resin molded product, it is preferable that an adipic acid polyester (polyester including an adipic acid-derived structural unit) is used as the (b) polyester plasticizer.

The viscosity of the (b) polyester plasticizer is preferably 500 mPa·s or more, and more preferably 1,000 mPa·s or more, and is preferably 8,000 mPa·s or less, and more preferably 5,000 mPa·s or less.

Moreover, the viscosity of the (b) polyester plasticizer may be 3,000 mPa·s or more, or may be 3,000 mPa·s or less.

Note that the "viscosity" can be measured in accordance with JIS Z8803 at a temperature of 25°C.

The content of the (b) polyester plasticizer in the vinyl chloride resin composition is preferably 30 parts by mass or more, more preferably 50 parts by mass or more, even more preferably 70 parts by mass or more, further preferably 90 parts by mass or more, and even further preferably 95 parts by mass or more relative to 100 parts by mass of the (a) vinyl chloride resin, and is preferably 200 parts by mass or less, more preferably 180 parts by mass or less, even more preferably 150 parts by mass or less, further preferably 130 parts by mass or less, and even further preferably 120 parts by mass or less relative to 100 parts by mass of the (a) vinyl chloride resin. When the content of the (b) polyester plasticizer in the vinyl chloride resin composition is not less than any of the lower limits set forth above, tensile characteristics (tensile strength and tensile elongation) and heat shrinkage resistance of a formed vinyl chloride resin molded product can be improved. On the other hand, when the content of the (b) polyester plasticizer in the vinyl chloride resin composition is not more than any of the upper limits set forth above, sufficiently high adhesiveness of a formed vinyl chloride resin molded product to a foamed polyurethane molded product can be ensured.

Moreover, the content of the (b) polyester plasticizer in the vinyl chloride resin composition may be 98 parts by mass or more relative to 100 parts by mass of the (a) vinyl chloride resin, or may be 99 parts by mass or less relative to 100 parts by mass of the (a) vinyl chloride resin.

### <(c) Silica>

The (c) silica may also be referred to as silicon dioxide (SiO₂), silicic anhydride, silicon oxide, and so forth.

Moreover, the (c) silica is a component that can improve adhesiveness to a foamed polyurethane molded product of a vinyl chloride resin molded product that is formed using the vinyl chloride resin composition.

Note that although the (c) silica that is contained in the presently disclosed vinyl chloride resin composition may be amorphous silica or may be crystalline silica, amorphous silica is preferable from a viewpoint of further improving adhesiveness of a formed vinyl chloride resin molded product to a foamed polyurethane molded product.

The presently disclosed vinyl chloride resin composition is required to satisfy relationship formula (1): Y ≥ -224X + 325, given that the content of the (c) silica relative to 100 parts by mass of the (a) vinyl chloride resin is taken to be X parts by mass and the oil absorption capacity of the (c) silica is taken to be Y mL/100 g. As a result of the vinyl chloride resin composition satisfying relationship formula (1) set forth above, a formed vinyl chloride resin molded product can display excellent adhesiveness to a foamed polyurethane molded product.

The content of the (c) silica relative to 100 parts by mass of the (a) vinyl chloride resin in the vinyl chloride resin composition (i.e., the value of X) is not specifically limited so long as relationship formula (1) set forth above is satisfied, but is preferably 0.1 parts by mass or more, more preferably 0.15 parts by mass or more, even more preferably 0.2 parts by mass or more, and further preferably 0.25 parts by mass or more, and is preferably 2 parts by mass or less, more preferably 1.5 parts by mass or less, even more preferably 1 part by mass or less, further preferably 0.8 parts by mass or less, and even further preferably 0.6 parts by mass or less. When the content of the (c) silica in the vinyl chloride resin composition is not less than any of the lower limits set forth above, adhesiveness of a formed vinyl chloride resin molded product to a foamed polyurethane molded product can be further improved. When the content of the (c) silica in the vinyl chloride resin composition is not more than any of the upper limits set forth above, sufficiently high tensile characteristics (tensile strength and tensile elongation) of a formed vinyl chloride resin molded product can be ensured.

Moreover, the content of the (c) silica relative to 100 parts by mass of the (a) vinyl chloride resin in the vinyl chloride resin composition (i.e., the value of X) may be 0.26 parts by mass or more, or may be 0.27 parts by mass or less.

The oil absorption capacity of the (c) silica (i.e., the value of Y) is not specifically limited so long as relationship formula (1) set forth above is satisfied, but is preferably 20 mL/100 g or more, more preferably 100 mL/100 g or more, even more preferably 200 mL/100 g or more, further preferably 250 mL/100 g or more, and even further preferably 280 mL/100 g or more. When the oil absorption capacity of the (c) silica is not less than any of the lower limits set forth above, adhesiveness of a formed vinyl chloride resin molded product to a foamed polyurethane molded product can be further improved. Moreover, when the oil absorption capacity of the (c) silica is not less than any of the lower limits set forth above, adhesiveness of a formed vinyl chloride resin molded product to a foamed polyurethane molded product can be sufficiently improved even when the additive amount of the (c) silica is restricted to a small amount, and thus sufficiently high tensile characteristics (tensile strength and tensile elongation) of a formed vinyl chloride resin molded product can be ensured.

Note that the upper limit for the oil absorption capacity of the (c) silica is not specifically limited so long as relationship formula (1) set forth above is satisfied, but may be 1,000 mL/100 g or less, may be 800 mL/100 g or less, may be 600 mL/100 g or less, or may be 400 mL/100 g or less, for example.

Moreover, the oil absorption capacity of the (c) silica may be 300 mL/100 g or more, may be 300 mL/100 g or less, or may be 400 mL/100 g or more.

Furthermore, the presently disclosed vinyl chloride resin composition preferably further satisfies relationship formula (2): Y ≥ -100X + 325 in addition to relationship formula (1) set forth above. When the vinyl chloride resin composition further satisfies relationship formula (2) set forth above, adhesiveness of a formed vinyl chloride resin molded product to a foamed polyurethane molded product can be further improved.

Note that the (c) silica that is contained in the presently disclosed vinyl chloride resin composition normally has a particulate form, but is not specifically limited thereto.

The volume-average particle diameter of the (c) silica is preferably 1 µm or more, more preferably 2 µm or more, even more preferably 3 µm or more, and further preferably 4 µm or more, and is preferably 10 µm or less, more preferably 8 µm or less, and even more preferably 6 µm or less. When the volume-average particle diameter of the (c) silica is within any of the specific ranges set forth above, adhesiveness of a formed vinyl chloride resin molded product to a foamed polyurethane molded product can be further improved, and sufficiently high tensile characteristics (tensile strength and tensile elongation) of the vinyl chloride resin molded product can also be ensured.

Moreover, the volume-average particle diameter of the (c) silica may be 4 µm or less.

From a viewpoint of further improving adhesiveness of a formed vinyl chloride resin molded product to a foamed polyurethane molded product, it is preferable that the (c) silica has a porous structure.

Moreover, the BET specific surface area of the (c) silica is preferably 30 m²/g or more, more preferably 42 m²/g or more, even more preferably 100 m²/g or more, further preferably 160 m²/g or more, and even further preferably 200 m²/g or more. When the BET specific surface area of the (c) silica is not less than any of the lower limits set forth above, adhesiveness of a formed vinyl chloride resin molded product to a foamed polyurethane molded product can be further improved. Moreover, when the BET specific surface area of the (c) silica is not less than any of the lower limits set forth above, adhesiveness of a formed vinyl chloride resin molded product to a foamed polyurethane molded product can be sufficiently improved even when the additive amount of the (c) silica is restricted to a small amount, and thus sufficiently high tensile characteristics (tensile strength and tensile elongation) of a formed vinyl chloride resin molded product can be ensured.

The upper limit for the BET specific surface area of the (c) silica is not specifically limited, but may be 1,500 m²/g or less, may be 1,200 m²/g or less, may be 1,000 m²/g or less, or may be 800 m²/g or less.

Moreover, the BET specific surface area of the (c) silica may be 225 m²/g or more, may be 225 m²/g or less, may be 700 m²/g or more, or may be 700 m²/g or less.

Note that the term "BET specific surface area" as used in the present disclosure refers to the nitrogen adsorption specific surface area measured by the BET method.

The content of the (c) silica relative to 100 parts by mass of the (b) polyester plasticizer in the vinyl chloride resin composition is not specifically limited, but is preferably 0.1 parts by mass or more, more preferably 0.15 parts by mass or more, even more preferably 0.2 parts by mass or more, and further preferably 0.25 parts by mass or more, and is preferably 2 parts by mass or less, more preferably 1.5 parts by mass or less, even more preferably 1 part by mass or less, further preferably 0.8 parts by mass or less, and even further preferably 0.6 parts by mass or less. When the content of the (c) silica relative to 100 parts by mass of the (b) polyester plasticizer in the vinyl chloride resin composition is not less than any of the lower limits set forth above, adhesiveness of a formed vinyl chloride resin molded product to a foamed polyurethane molded product can be further improved. On the other hand, when the content of the (c) silica relative to 100 parts by mass of the (b) polyester plasticizer in the vinyl chloride resin composition is not more than any of the upper limits set forth above, sufficiently high tensile characteristics (tensile strength and tensile elongation) of a formed vinyl chloride resin molded product can be ensured.

Note that the content of the (c) silica relative to 100 parts by mass of the (b) polyester plasticizer in the vinyl chloride resin composition may be 0.27 parts by mass or more, or may be 0.28 parts by mass or less.

### <(d) Other plasticizers>

The presently disclosed vinyl chloride resin composition may optionally further contain (d) other plasticizers besides the (b) polyester plasticizer described above.

Specific examples of (d) other plasticizers include plasticizers other than the above-described (b) polyester plasticizer among plasticizers that are described in WO2016/098344A1. Of these plasticizers, epoxidized vegetable oil is preferable from a viewpoint of further enhancing tensile characteristics (tensile strength and tensile elongation) of a formed vinyl chloride resin molded product, and epoxidized soybean oil is more preferable.

The content of (d) other plasticizers in the vinyl chloride resin composition is not specifically limited and can be set as not less than 0 parts by mass and not more than 15 parts by mass relative to 100 parts by mass of the (a) vinyl chloride resin.

Moreover, in a case in which epoxidized vegetable oil such as epoxidized soybean oil is used as (d) another plasticizer, the content of the epoxidized vegetable oil serving as the (d) other plasticizer is preferably 2 parts by mass or more, more preferably 3 parts by mass or more, and even more preferably 4 parts by mass or more relative to 100 parts by mass of the (a) vinyl chloride resin, and is preferably 10 parts by mass or less, and more preferably 7 parts by mass or less relative to 100 parts by mass of the (a) vinyl chloride resin from a viewpoint of even further enhancing tensile characteristics (tensile strength and tensile elongation) of a formed vinyl chloride resin molded product.

Also, although the content of (d) other plasticizers in the vinyl chloride resin composition is not specifically limited, the content can be set as not less than 0 parts by mass and not more than 15 parts by mass relative to 100 parts by mass of the (b) polyester plasticizer.

Moreover, in a case in which epoxidized vegetable oil such as epoxidized soybean oil is used as (d) another plasticizer, the content of the epoxidized vegetable oil serving as the (d) other plasticizer is preferably 2 parts by mass or more, more preferably 3 parts by mass or more, and even more preferably 4 parts by mass or more relative to 100 parts by mass of the (b) polyester plasticizer, and is preferably 10 parts by mass or less, and more preferably 7 parts by mass or less relative to 100 parts by mass of the (b) polyester plasticizer. When the content of epoxidized vegetable oil as (d) another plasticizer is not less than any of the lower limits set forth above relative to 100 parts by mass of the (b) polyester plasticizer, tensile characteristics (tensile strength and tensile elongation) of a formed vinyl chloride resin molded product can be even further enhanced. On the other hand, when the content of epoxidized vegetable oil as (d) another plasticizer is not more than any of the upper limits set forth above relative to 100 parts by mass of the (b) polyester plasticizer, sufficiently high heat shrinkage resistance of a formed vinyl chloride resin molded product can be ensured.

### <Additives>

The presently disclosed vinyl chloride resin composition may further contain various additives besides the components set forth above. Examples of additives that may be used include, but are not specifically limited to, lubricants; stabilizers such as perchloric acid-treated hydrotalcite, zeolites, β-diketones, and fatty acid metal salts; mold release agents; dusting agents other than the previously described vinyl chloride resin fine particles; impact modifiers; perchloric acid compounds other than perchloric acid-treated hydrotalcite (sodium perchlorate, potassium perchlorate, etc.); antioxidants; fungicides; flame retardants; antistatic agents; fillers; light stabilizers; foaming agents; and pigments.

Additives that are described in WO2016/098344A1, for example, can be used as the aforementioned additives that can be contained in the presently disclosed vinyl chloride resin composition, and suitable amounts thereof can also be the same as described in WO2016/098344A1.

### <Production method of vinyl chloride resin composition>

The presently disclosed vinyl chloride resin composition can be produced by mixing the components described above without any specific limitations.

For example, the presently disclosed vinyl chloride resin composition can be produced through:
(I) a dry blending step of mixing components other than the (c) silica and an optional dusting agent (inclusive of vinyl chloride resin fine particles) from among components that are contained in the vinyl chloride resin composition at not lower than 100°C and not higher than 200°C to obtain a mixture; and
(II) a silica mixing step of mixing the obtained mixture with the (c) silica and the optional dusting agent under conditions where the temperature of the mixture is lower than 100°C.

In the dry blending step, components other than the (c) silica and an optional dusting agent (inclusive of vinyl chloride resin fine particles) from among components that are contained in the vinyl chloride resin composition are mixed at not lower than 70°C and not higher than 200°C.

Examples of the components other than the (c) silica and optional dusting agent (inclusive of vinyl chloride resin fine particles) from among components that are contained in the vinyl chloride resin composition include vinyl chloride resin particles serving as the (a) vinyl chloride resin, the (b) polyester plasticizer, the (d) other plasticizers, and various optional additives (excluding dusting agents).

Note that when the aforementioned components are said to be "mixed at not lower than 100°C and not higher than 200°C" in the dry blending step, this means that the components are mixed under conditions having a maximum temperature of not lower than 100°C and not higher than 200°C.

Mixing of the components in the dry blending step is preferably carried out using a Henschel mixer.

In the silica mixing step, the mixture obtained in the above-described dry blending step is mixed with the (c) silica and the optional dusting agent under conditions where the temperature of the mixture is lower than 70°C. By adding and mixing the (c) silica under conditions where the temperature of the mixture is lower than 100°C, a vinyl chloride resin molded product that is formed using the produced vinyl chloride resin composition can display even better adhesiveness to a foamed polyurethane molded product.

Note that in the silica mixing step, the (c) silica may be added to and mixed with the mixture first, the optional dusting agent (for example, vinyl chloride resin fine particles) may be added to and mixed with the mixture first, or the (c) silica and the optional dusting agent may be added to and mixed with the mixture at the same time.

Also note that a Henschel mixer used in the above-described dry blending step is typically also used in the silica mixing step, though no specific limitations are made.

After mixing of the mixture with the (c) silica and the optional dusting agent in the silica mixing step, the resultant composition can be obtained as the presently disclosed vinyl chloride resin composition without undergoing a step of heating to 100°C.

### <Use of vinyl chloride resin composition>

The obtained vinyl chloride resin composition can suitably be used in powder molding, and can more suitably be used in powder slush molding.

### (Vinyl chloride resin molded product)

A feature of the presently disclosed vinyl chloride resin molded product is that it is obtained by molding the vinyl chloride resin composition set forth above by any method. As a result of the presently disclosed vinyl chloride resin molded product being formed using the vinyl chloride resin composition set forth above, the presently disclosed vinyl chloride resin molded product normally contains at least the (a) vinyl chloride resin, (b) polyester plasticizer, and (c) silica and satisfies relationship formula (1): Y ≥ -224X + 325, given that the content of the (c) silica relative to 100 parts by mass of the (a) vinyl chloride resin is taken to be X parts by mass and the oil absorption capacity of the (c) silica is taken to be Y mL/g. Moreover, the presently disclosed vinyl chloride resin molded product has excellent adhesiveness to a foamed polyurethane molded product.

Therefore, the presently disclosed vinyl chloride resin molded product can suitably be used as an automobile interior material such as a surface skin of an automobile instrument panel.

### <Formation method of vinyl chloride resin molded product>

Although no specific limitations are placed on the mold temperature in powder slush molding in a situation in which the vinyl chloride resin molded product is formed by powder slush molding, the mold temperature is preferably 200°C or higher, and more preferably 220°C or higher, and is preferably 300°C or lower, and more preferably 280°C or lower.

The following method, for example, may be used in production of the vinyl chloride resin molded product without any specific limitations. In this method, the presently disclosed vinyl chloride resin composition is sprinkled onto a mold having a temperature within any of the ranges set forth above. The vinyl chloride resin composition is initially left for not less than 5 seconds and not more than 30 seconds and, after shaking off any excess vinyl chloride resin composition, is then further left for not less than 30 seconds and not more than 3 minutes at an arbitrary temperature. The mold is subsequently cooled to a temperature of not lower than 10°C and not higher than 60°C, and the presently disclosed vinyl chloride resin molded product that is obtained is removed from the mold. A sheet-shaped molded product that imitates the shape of the mold is obtained.

### (Laminate)

The presently disclosed laminate includes a foamed polyurethane molded product and the vinyl chloride resin molded product set forth above. The vinyl chloride resin molded product typically constitutes one surface of the laminate.

As a result of the presently disclosed laminate including a vinyl chloride resin molded product that is formed using the presently disclosed vinyl chloride resin composition and that has excellent adhesiveness to a foamed polyurethane molded product, the vinyl chloride resin molded product and the foamed polyurethane molded product are adhered well and are not easily peeled apart. Therefore, the presently disclosed laminate can suitably be used as an automobile interior material forming an automobile interior component (particularly an automobile instrument panel).

The method by which the foamed polyurethane molded product and the vinyl chloride resin molded product are stacked is not specifically limited and may, for example, be a method such as described below. Specifically, (1) a method in which the foamed polyurethane molded product and the vinyl chloride resin molded product are separately prepared and are subsequently adhered to one another by thermal fusion bonding, thermal adhesion, or using a commonly known adhesive, or (2) a method in which raw materials of the foamed polyurethane molded product such as an isocyanate and a polyol are caused to react and polymerize on the vinyl chloride resin molded product while carrying out polyurethane foaming by a commonly known method to directly form the foamed polyurethane molded product on the vinyl chloride resin molded product may be adopted. The latter method (2) is more suitable because it involves a simple process and enables laminates of various different shapes to be obtained while easily achieving strong adhesion of the vinyl chloride resin molded product and the foamed polyurethane molded product.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, the following methods were used to measure and evaluate the volume-average particle diameter of silica and the tensile characteristics (tensile strength and tensile elongation) and adhesiveness to a foamed polyurethane molded product of a vinyl chloride resin molded product.

### <Volume-average particle diameter of silica>

In a particle size distribution by volume measured by laser diffraction/scattering using a particle size distribution analyzer (produced by Shimadzu Corporation; product name: SALD-2300), the particle diameter (D50) at which cumulative volume calculated from a small diameter end of the distribution reached 50% was taken to be the volume-average particle diameter (µm) of silica.

### <Tensile characteristics (tensile strength and tensile elongation)>

An obtained vinyl chloride resin molded sheet was punched out by a No. 1 Dumbbell described in JIS K6251, and then tensile breaking stress (MPa) and tensile breaking elongation (%) were measured in accordance with JIS K7113 at normal temperature (23°C) with a tensing rate of 200 mm/min. Note that a larger value for tensile breaking stress indicates that the vinyl chloride resin molded sheet has better tensile strength. Also note that a larger value for tensile breaking elongation indicates that the vinyl chloride resin molded sheet has better tensile elongation.

### <Adhesiveness to foamed polyurethane molded product>

Using a laminate in which an obtained vinyl chloride resin molded sheet was lined with a foamed polyurethane molded product, the vinyl chloride resin molded sheet was peeled from the foamed polyurethane molded product. After peeling, a surface of the vinyl chloride resin molded sheet that had been lined with the foamed polyurethane molded product among surfaces of the vinyl chloride resin molded sheet was visually checked, and adhesiveness of the vinyl chloride resin molded sheet (vinyl chloride resin molded product) to the polyurethane molded product was evaluated.

An evaluation of "foam destruction" (evaluation "A" in Table 1) was given in a case in which a surface portion of the foamed polyurethane molded product remained over the entirety of the visually checked surface of the vinyl chloride resin molded sheet, an evaluation of "partial interfacial peeling" (evaluation "B" in Table 1) was given in a case in which a surface portion of the foamed polyurethane molded product remained at only some locations at the surface of the vinyl chloride resin molded sheet but did not remain at other locations, and an evaluation of "complete interfacial peeling" (evaluation "C" in Table 1) was given in a case in which a surface portion of the foamed polyurethane molded product did not remain at any location at the surface of the vinyl chloride resin molded sheet.

Note that when a surface portion of the foamed polyurethane molded product remains at more locations at the surface of the vinyl chloride resin molded sheet, this indicates that the vinyl chloride resin molded sheet (vinyl chloride resin molded product) has higher adhesiveness to the foamed polyurethane molded product.

### (Example 1)

### <Production of vinyl chloride resin composition>

With the exception of plasticizers (polyester plasticizer and epoxidized soybean oil), vinyl chloride resin fine particles used as a dusting agent, and silica, components indicated in Table 1 were loaded into and mixed in a Henschel mixer. At the point at which the temperature of the mixture rose to 80°C, all of the plasticizers were added, drying up of the mixture was caused to occur (i.e., the mixture changed to a dry state through absorption of the plasticizers by vinyl chloride resin particles used as a vinyl chloride resin), and mixing was continued until the maximum temperature reached not lower than 100°C and not higher than 200°C. Thereafter, once the dried-up mixture had cooled to a temperature of lower than 100°C, the vinyl chloride resin fine particles used as the dusting agent and the silica were added to the mixture to produce a vinyl chloride resin composition.

### <Formation of vinyl chloride resin molded product>

The obtained vinyl chloride resin composition was sprinkled onto a textured mold that was heated to a temperature of 250°C and, after being left to melt for an arbitrary time, excess vinyl chloride resin composition was shaken off. Thereafter, the textured mold onto which the vinyl chloride resin composition had been sprinkled was placed at rest in an oven set to a temperature of 200°C, and, once 60 seconds had passed after being placed at rest, the textured mold was cooled with cooling water. Once the mold temperature had dropped to 40°C, a 145 mm × 175 mm × 1 mm vinyl chloride resin molded sheet was removed from the mold as a vinyl chloride resin molded product.

The obtained vinyl chloride resin composition product was used to evaluate tensile characteristics (tensile strength and tensile elongation). The results are shown in Table 1.

### <Formation of laminate>

The obtained vinyl chloride resin molded sheet was cut to 100 mm × 100 mm. Two vinyl chloride resin molded sheets that had been cut in this manner were placed inside of a 200 mm × 300 mm × 10 mm mold such as to not overlap and with the textured surface facing downward.

Separately thereto, a polyol mixture containing 50 parts by mass of a propylene oxide/ethylene oxide (PO/EO) block adduct of propylene glycol (hydroxyl value: 28; terminal EO unit content: 10%; internal EO unit content: 4%), 50 parts by mass of a PO/EO block adduct of glycerin (hydroxyl value: 21; terminal EO unit content: 14%), 2.5 parts by mass of water, 0.2 parts by mass of an ethylene glycol solution of triethylenediamine (produced by Tosoh Corporation; product name: TEDA-L33), 1.2 parts by mass of triethanolamine, 0.5 parts by mass of triethylamine, and 0.5 parts by mass of a foam stabilizer (produced by Shin-Etsu Chemical Co., Ltd.; product name: F-122) was mixed with polymethylene polyphenylene polyisocyanate (polymeric MDI) in a ratio determined to give an index of 98 so as to prepare a mixed liquid. The prepared mixed liquid was poured onto the two vinyl chloride resin molded sheets that had been placed in the mold as described above. Thereafter, the mold was covered by a 348 mm × 255 mm × 10 mm aluminum plate to seal the mold. Once 5 minutes had passed from sealing of the mold, a laminate in which a vinyl chloride resin molded sheet of 1 mm in thickness was lined with a foamed polyurethane molded product was removed from the mold, and adhesiveness of the vinyl chloride resin molded product to the foamed polyurethane molded product was measured by the previously described method straight away thereafter. The result is shown in Table 1.

### (Examples 2 to 8 and Comparative Examples 1 to 5)

A vinyl chloride resin composition, a vinyl chloride resin molded product, and a laminate were produced in the same way as in Example 1 with the exception that the type and/or amount of silica that was used was changed as indicated in Table 1. The obtained vinyl chloride resin molded product and laminate were used to evaluate the tensile characteristics (tensile strength and tensile elongation) and adhesiveness to a foamed polyurethane molded product of the vinyl chloride resin molded product. The results are shown in Table 1.

**[Table 1]**

| | | | | Comparative Example 1 | Comparative Example 2 | Comparative Example 3 | Comparative Example 4 | Comparative Example 5 | Example 1 | Example 2 | Example 3 | Example 4 | Example 5 | Example 6 | Example 7 | Example 8 |
|---|---|---|---|---|---|---|---|---|---|---|---|---|---|---|---|---|
| | Varyl chloride resin | Vinyl chloride resin particles⁽¹⁾ [parts by mass] | | 100 | 100 | 100 | 100 | 100 | 100 | 100 | 100 | 100 | 100 | 100 | 100 | 100 |
| | | Vinyl chloride resin fine particles⁽²⁾ [parts by mass] | | 12 | 12 | 12 | 12 | 12 | 12 | 12 | 12 | 12 | 12 | 12 | 12 | 12 |
| | Polyester plasticizer | Adipic acid polyester⁽³⁾ [parts by mass] | | 110 | 110 | 110 | 110 | 110 | 110 | 110 | 110 | 110 | 110 | 110 | 110 | 110 |
| | Other plasticizer | Epoxidized soybean oil⁽⁴⁾ [parts by mass] | | 5 | 5 | 5 | 5 | 5 | 5 | 5 | 5 | 5 | 5 | 5 | 5 | 5 |
| | Stabilizers | Perchloric acid-substituted hydrotalcite⁽⁵⁾ [parts by mass] | | 2.5 | 2.5 | 2.5 | 2.5 | 2.5 | 2.5 | 2.5 | 2.5 | 2.5 | 2.5 | 2.5 | 2.5 | 2.5 |
| | | Zeolite⁽⁶⁾ [parts by mass] | | 1.5 | 1.5 | 1.5 | 1.5 | 1.5 | 1.5 | 1.5 | 1.5 | 1.5 | 1.5 | 1.5 | 1.5 | 1.5 |
| | | Zinc stearate⁽⁷⁾ [parts by mass] | | 0.3 | 0.3 | 0.3 | 0.3 | 0.3 | 0.3 | 0.3 | 0.3 | 0.3 | 0.3 | 0.3 | 0.3 | 0.3 |
| Formulation | | Hindered amine light stabilizer⁽⁸⁾ [parts by mass] | | 0.2 | 0.2 | 0.2 | 0.2 | 0.2 | 0.2 | 0.2 | 0.2 | 0.2 | 0.2 | 0.2 | 0.2 | 0.2 |
| | Mold release agent | 12-Hydroxystearic acid⁽⁹⁾ [parts by mass] | | 0.4 | 0.4 | 0.4 | 0.4 | 0.4 | 0.4 | 0.4 | 0.4 | 0.4 | 0.4 | 0.4 | 0.4 | 0.4 |
| | Silica | NP-30 (oil absorption capacity: 30 mL/100 g)⁽¹⁰⁾ [parts by mass] | | - | 1 | - | - | - | - | - | - | - | - | - | - | - |
| | | E-75 (oil absorption capacity: 120 mL/100 g)⁽¹¹⁾ [parts by mass] | | - | - | 1 | - | - | - | - | - | - | - | - | - | - |
| | | E-1011 (oil absorption capacity 230 mL/100 g)⁽¹²⁾ [parts by mass] | | - | - | - | 0.3 | - | 1 | - | - | - | - | - | - | - |
| | | FINESIL E-50 (oil absorption capacity 270 mL/100 g)⁽¹³⁾ [parts by mass] | | - | - | - | - | - | - | 0.3 | 1 | 2 | - | - | - | - |
| | | K-50C (oil absorption capacity: 300 mL/100 g)⁽¹⁴⁾ [parts by mass] | | - | - | - | - | 0.1 | - | - | - | - | 0.2 | 0.3 | 1 | - |
| | | H-33 (oil absorption capacity: 400 mL/100 g)⁽¹⁵⁾ [parts by mass] | | - | - | - | - | - | - | - | - | - | - | - | - | 0.3 |
| | Pigment | Black⁽¹⁶⁾ [parts by mass] | | 3.80 | 3.80 | 3.80 | 3.80 | 3.80 | 3.80 | 3.80 | 3.80 | 3.80 | 3.80 | 3.80 | 3.80 | 3.80 |
| | | Value of X (content of silica relative to 100 parts by mass of vinyl chloride resin) [parts by mass] | | - | 0.89 | 0.89 | 0.27 | 0.09 | 0.89 | 0.27 | 0.89 | 1.79 | 0.18 | 0.27 | 0.89 | 0.27 |
| Relationship of X and Y | | Value of Y (oil absorption capacity of silica) [mL/100 g] | | - | 30 | 120 | 230 | 300 | 230 | 270 | 270 | 270 | 300 | 300 | 300 | 400 |
| | | Relationship formula (1): Y ≥ -224X + 325 | | - | Not satisfied | Not satisfied | Not satisfied | Not satisfied | Satisfied | Satisfied | Satisfied | Satisfied | Satisfied | Satisfied | Satisfied | Satisfied |
| | | Relationship formula (2): Y ≥ -100X + 325 | | - | Not satisfied | Not satisfied | Not satisfied | Not satisfied | Not satisfied | Not satisfied | Satisfied | Satisfied | Not satisfied | Satisfied | Satisfied | Satisfied |
| Other physical properties of silica | | Volume-average particle diameter of silica [µm] | | - | 3 | 2 | 2 | 4 | 2 | 4 | 4 | 4 | 4 | 4 | 4 | 4 |
| | | BET specific surface area of silica [m²/g] | | - | 40 | 45 | 150 | 225 | 150 | 182 | 182 | 182 | 225 | 225 | 225 | 700 |
| Evaluation results | | Adhesiveness to foamed polyurethane molded product | | C | C | C | C | C | B | B | A | A | B | A | A | A |
| | | Tensile characteristics at normal temperature (23°C) | Tensile breaking elongation [%] | 330 | 330 | 310 | 320 | 340 | 300 | 330 | 310 | 150 | 330 | 330 | 310 | 330 |
| | | | Tensile breaking stress [MPa] | 12.0 | 120 | 19.5 | 12.5 | 12.0 | 11.5 | 12.5 | 110 | 8.0 | 120 | 12.5 | 100 | 19.5 |

| | | | | | | | | | | | | | | | | |
|---|---|---|---|---|---|---|---|---|---|---|---|---|---|---|---|---|
| (1) Product name: ZEST^{®} (ZEST is a registered trademark in Japan, other countries, or both) 1700ZI (produced by suspension polymerization; average degree of polymerization: 1,700; average particle diameter: 130 µm); produced by Shin Dai-ichi Vinyl Corporation (2) Product name: ZEST PQLTX (produced by emulsion polymerization; average degree of polymerization: 800; average particle diameter: 1.8 µm); produced by Shin Dai-ichi Vinyl Corporation (3) Product name: ADK CIZER HPN-3130 (adipic acid polyester; viscosity (25°C): 3,000 mPa·s); produced by Adeka Corporation (4) Product name: ADK CIZER O-130S; produced by Adeka Corporation (5) Product name: ALCAMIZER^{®} 5 (ALCAMIZER is a registered trademark in Japan, other countries, or both); produced by Kyowa Chemical Industry Co., Ltd. (6) Product name: MIZUKALIZER DS; produced by Mizusawa Industrial Chemicals, Ltd. (7) Product name: SAKAI SZ2000; produced by Sakai Chemical Industry Co., Ltd. (8) Product name: ADK STAB LA-72; produced by Adeka Corporation (9) Product name: ADK STAB LS-12; produced by Adeka Corporation (10) Product name: SUNSPHERE NP-30 (amorphous silica; oil absorption capacity: 30 mL/100 g; BET specific surface area: 40 m²/g); produced by Asahi Glass Si-Tech Co., Ltd. (11) Product name: Nipsil E-75 (amorphous silica; oil absorption capacity: 120 mL/100 g; BET specific surface area: 45 m²/g); produced by Tosoh Silica Corporation (12) Product name: Nipsil E-1011 (amorphous silica; oil absorption capacity: 230 mL/100 g; BET specific surface area: 150 m²/g); produced by Tosoh Silica Corporation (13) Product name: FINESIL E-50 (amorphous silica; oil absorption capacity: 270 mL/100 g; BET specific surface area: 182 m²/g); produced by Maruo Calcium Co., Ltd. (14) Product name: Nipsil K-500 (amorphous silica; oil absorption capacity: 300 mL/100 g; BET specific surface area: 225 m²/g); produced by Tosoh Silica Corporation (15) Product name: SUNSPHERE H-33 (amorphous silica; oil absorption capacity: 400 mL/100 g; BET specific surface area: 700 m²/g); produced by Asahi Glass Si-Tech Co., Ltd. (16) Product name: DA PX 1720(A) Black; produced by Dainichiseika Color and Chemicals Mfg. Co., Ltd. | | | | | | | | | | | | | | | | |

It can be seen from Table 1 that by using the vinyl chloride resin compositions of Examples 1 to 8, which each contain a vinyl chloride resin, a polyester plasticizer, and silica and satisfy relationship formula (1): Y ≥ -224X + 325, given that the content of the silica relative to 100 parts by mass of the vinyl chloride resin is taken to be X parts by mass and the oil absorption capacity of the silica is taken to be Y mL/100 g, it is possible to form a vinyl chloride resin molded product having excellent adhesiveness to a foamed polyurethane molded product.

In contrast, it can be seen that adhesiveness of a formed vinyl chloride resin molded product to a foamed polyurethane molded product is poor when using the vinyl chloride resin composition of Comparative Example 1, which does not contain silica.

It can also be seen that adhesiveness of a formed vinyl chloride resin molded product to a foamed polyurethane molded product is poor when using the vinyl chloride resin compositions of Comparative Examples 2 to 5, which each contain a vinyl chloride resin, a polyester plasticizer, and silica but do not satisfy the specific relationship formula set forth above.

### INDUSTRIAL APPLICABILITY

According to the present disclosure, it is possible to provide a vinyl chloride resin composition that is capable of forming a vinyl chloride resin molded product having excellent adhesiveness to a foamed polyurethane molded product.

Moreover, according to the present disclosure, it is possible to provide a vinyl chloride resin molded product having excellent adhesiveness to a foamed polyurethane molded product.

Furthermore, according to the present disclosure, it is possible to provide a laminate including this vinyl chloride resin molded product.

## Claims

1. A vinyl chloride resin composition comprising a vinyl chloride resin, a polyester plasticizer, and silica, wherein
the vinyl chloride resin composition satisfies relationship formula (1): Y ≥ -224X + 325, given that:
content of the silica relative to 100 parts by mass of the vinyl chloride resin is taken to be X parts by mass; and
oil absorption capacity of the silica is taken to be Y mL/100g.

2. The vinyl chloride resin composition according to claim 1, wherein the oil absorption capacity of the silica is 200 mL/100 g or more.

3. The vinyl chloride resin composition according to claim 1, wherein the silica has a volume-average particle diameter of not less than 0.1 µm and not more than 100 µm.

4. The vinyl chloride resin composition according to claim 1, wherein the content of the silica is not less than 0.1 parts by mass and not more than 2 parts by mass relative to 100 parts by mass of the vinyl chloride resin.

5. The vinyl chloride resin composition according to claim 1, further satisfying relationship formula (2): Y ≥ -100X + 325.

6. The vinyl chloride resin composition according to claim 1, wherein the polyester plasticizer includes an adipic acid polyester.

7. The vinyl chloride resin composition according to claim 1, wherein content of the polyester plasticizer is not less than 30 parts by mass and not more than 200 parts by mass relative to 100 parts by mass of the vinyl chloride resin.

8. The vinyl chloride resin composition according to claim 1 used in powder molding.

9. The vinyl chloride resin composition according to claim 1 used in powder slush molding.

10. A vinyl chloride resin molded product obtained through molding of the vinyl chloride resin composition according to any one of claims 1 to 9.

11. The vinyl chloride resin molded product according to claim 10 for a surface skin of an automobile instrument panel.

12. A laminate comprising: a foamed polyurethane molded product; and the vinyl chloride resin molded product according to claim 10.

13. The laminate according to claim 12 for an automobile instrument panel.
